(19) Europäisches Patentamt / European Patent Office / Office européen des brevets

(11) **EP 1 711 355 B1**

(12) **EUROPÄISCHE PATENTSCHRIFT**

(45) Veröffentlichungstag und Bekanntmachung des Hinweises auf die Patenterteilung:
**15.10.2008  Patentblatt 2008/42**

(21) Anmeldenummer: 05707921.2

(22) Anmeldetag: **02.02.2005**

(51) Int Cl.:
***B60C 23/06*** (2006.01)

(86) Internationale Anmeldenummer:
**PCT/EP2005/050450**

(87) Internationale Veröffentlichungsnummer:
**WO 2005/072995 (11.08.2005 Gazette 2005/32)**

(54) **VERFAHREN ZUR INDIREKTEN REIFENDRUCKÜBERWACHUNG**

METHOD FOR INDIRECT TYRE PRESSURE MONITORING

PROCEDE DE SURVEILLANCE INDIRECTE DE LA PRESSION DE PNEUS

(84) Benannte Vertragsstaaten:
**DE FR**

(30) Priorität: **02.02.2004   DE 102004005173**

(43) Veröffentlichungstag der Anmeldung:
**18.10.2006   Patentblatt 2006/42**

(73) Patentinhaber:
• **Continental Teves AG & Co. oHG**
  **60488 Frankfurt am Main (DE)**
• **Continental Aktiengesellschaft**
  **30165 Hannover (DE)**

(72) Erfinder:
• **KÖBE, Andreas**
  **64625 Bensheim (DE)**
• **EDLING, Frank**
  **65929 Frankfurt am Main (DE)**
• **GRIESSER, Martin**
  **65760 Eschborn (DE)**
• **KOUKES, Vladimir**
  **64297 Darmstadt (DE)**
• **GOOTJES, Lennert**
  **30451 Hannover (DE)**
• **HOFMANN, Maik**
  **31848 Bad Münde (DE)**
• **KOHN, Joachim**
  **30161 Hannover (DE)**
• **RUNGE, Ines**
  **30543 Hannover (DE)**
• **CUNZ, Jörg**
  **63599 Biebergemünd (DE)**

(56) Entgegenhaltungen:
**EP-A- 0 832 768          EP-A- 0 925 960**
**WO-A-01/87647**

EP 1 711 355 B1

**Beschreibung**

Die Erfindung betrifft ein Verfahren gemäß Oberbegriff von Anspruch 1 und ein Computerprogrammprodukt gemäß Anspruch 15.

In modernen Kraftfahrzeugen finden vermehrt Systeme Anwendung, welche zu einem aktiven oder passiven Schutz der Insassen beitragen. Systeme zur Reifendrucküberwachung schützen die Fahrzeuginsassen vor Fahrzeugschäden, welche beispielsweise auf einen abnormalen Reifenluftdruck zurückzuführen sind. Durch einen abnormalen Reifenluftdruck kann sich beispielsweise der Reifenverschleiß und der Kraftstoffverbrauch erhöhen oder es kann zu einem Reifendefekt ("Reifenplatzer") kommen. Es sind bereits verschiedene Reifendrucküberwachungssysteme bekannt, welche entweder auf Basis direkt messender Sensoren arbeiten oder durch Auswertung von Drehzahl-oder Schwingungseigenschaften der Fahrzeugräder einen abnormalen Reifendruck erkennen.

Aus der DE 100 58 140 A1 ist ein sogenanntes indirekt messendes Reifendrucküberwachungssystem (DDS) bekannt, welches durch Auswertung der Raddrehbewegung einen Reifendruckverlust detektiert.

Aus der EP 0 578 826 B1 ist ein Reifendruckmesser bekannt, welcher auf Basis von Reifenschwingungen einen Druckverlust in einem Reifen ermittelt.

Eine Vorrichtung zur Reifendruckerkennung, in welcher die Schwingungsresonanzfrequenzen einiger Reifen mit Hilfe von Raddrehzahl-änderungen korrigiert werden, wird in der EP 0 832 768 A2 offenbart.

In der Reifendruckbestimmungsvorrichtung aus der EP 0 925 960 A2 wird der Reifendruck eines Reifens entweder anhand der Schwingungsresonanzfrequenz des Reifens oder anhand der Änderung der Raddrehgeschwindigkeit abgeschätzt.

In der WO 01/87647 A1 ist ein Verfahren und eine Vorrichtung zur Reifendrucküberwachung beschrieben, welche/s ein auf der Erfassung von Radradien basierendes Reifendrucküberwachungssystem und ein auf der Auswertung von Schwingungseigenschaften basierendes Reifendrucküberwachungssystem kombiniert.

Ziel der Erfindung ist es, ein Verfahren zur Reifendrucküberwachung bereitzustellen, welches ein bekanntes indirekt messendes Reifendrucküberwachungssystem durch Berücksichtigung der Torsionseigenfrequenzen dahingehend verbessert, dass die sichere Erkennung eines abnormalen Reifenluftdrucks erhöht wird.

Diese Aufgabe wird erfindungsgemäß durch das Verfahren nach Anspruch 1 gelöst.

Vorzugsweise werden die Prüfgrößen (DIAG, SIDE, AXLE) gleichzeitig bestimmt/ eingelernt. Um Rechenleistung des verwendeten Prozessors/ Mikrocomputers zu sparen werden in einer weiteren bevorzugten Ausführung die Prüfgrößen (DIAG, SIDE, AXLE) nacheinander bestimmt/ eingelernt.

Die Bestimmung der Abrollumfangsdifferenzen ($\Delta$DIAG, $\Delta$SIDE, $\Delta$AXLE) aus den aktuell ermittelten und den gelernten Prüfgrößen (DIAG, SIDE, AXLE) erfolgt vorzugsweise in identischen Geschwindigkeits-, und/oder Radmomenten-, und/oder Querbeschleunigungsintervallen.

Es ist weiterhin bevorzugt, dass das Einlernen bei dem vorgeschriebenen Reifensolldruck erfolgt.

Weitere bevorzugte Ausgestaltungen des erfindungsgemäßen Verfahrens gehen aus den Unteransprüchen hervor. Die Erfindung wird im folgenden anhand mehrerer Ausführungsformen beschrieben.

Ausgehend von einem bekannten indirekt messenden Reifendrucküberwachungssystem (DDS), welches beispielsweise in der DE 100 58 140 A1 beschrieben ist, werden zusätzlich die Schwingungseigenschaften des Reifens betrachtet. Die Erfindung nutzt den Effekt aus, dass sich die Schwingungseigenschaften des Reifens (z. B. die Torsionseigenfrequenz) hauptsächlich aufgrund einer Veränderung des Reifenluftdrucks ändern.

Die Torsionseigenfrequenz $f_p$ des Reifens wird z. B. mit Hilfe einer Frequenzanalyse (z. B. Fourier-Transformation) der Raddrehzahlsignale und anschließender Bestimmung der Frequenz, für die z. B. ein Amplitudenmaximum im Frequenzspektrum vorliegt, ermittelt.

Das erfindungsgemäße Verfahren wird wie das indirekt messende Reifendrucküberwachungssystem (DDS) gestartet, d. h. der Fahrer muss das System z. B. per Taster zurücksetzen (Reset), wenn die Reifendrücke angepasst wurden bzw. Reifen oder Räder gewechselt worden sind. Nach dem Reset erfolgt eine Lernphase, wobei es sich zur Steigerung der Genauigkeit empfiehlt, exakt denselben Zeitraum für das Lernen vorzusehen wie bereits bei dem bekannten indirekten Reifendrucküberwachungssystem (DDS).

In einer ersten bevorzugten Ausführungsform des erfindungsgemäßen Verfahrens zur indirekten Reifendrucküberwachung werden die druckbedingten Änderungen des Abrollumfangs des indirekt messenden Reifendrucküberwachungssystems (DDS) bestimmt, wobei eine Warnung hinsichtlich eines Reifendruckverlusts ausgegeben wird, wenn festgelegte (Warn-) Schwellen überschritten werden. Diese Schwellen werden abhängig von den druckbedingten Änderungen der Schwingungseigenschaften festgelegt.

Das indirekt messende Reifendrucküberwachungssystem (DDS) ist hierbei so ausgelegt, dass es einen Reifendruckverlust an bis zu drei Radpositionen (Rad vorne links, Rad vorne rechts, Rad hinten links, Rad hinten rechts) erkennen kann. Hierzu werden drei Prüfgrößen (DIAG, SIDE, AXLE) gleichzeitig oder nacheinander bestimmt, wobei in jede Prüfgröße (DIAG, SIDE, AXLE) Größen eingehen, welche die Raddrehbewegungen der Räder beschreiben, wie beispielsweise die Umdrehungszeiten einer Radumdrehung, der Abrollumfang, etc.. Die Prüfgrößen bestehen im wesentlichen aus einem Quotienten in dessen Zähler und Nenner jeweils die Summe zweier die Raddrehbewegungen beschreibender Größen stehen. In dem Zähler der Prüfgröße DIAG steht beispielsweise die Summe der Größen der Raddrehbewegung der zwei sich diagonal gegenüberliegenden Räder (z. B. Rad vorne links und Rad hinten rechts), wohingegen im Nenner die Summe der übrigen Größen der Raddrehbewegungen steht (z. B. Rad vorne rechts und Rad hinten links). Bei der Prüfgröße SIDE stehen im Zähler beispielsweise die Größen der Raddrehbewegungen einer Fahrzeugseite (z. B. Rad vorne rechts und Rad hinten rechts), wohingegen bei der Prüfgröße AXLE im Zähler die Größen der Raddrehbewegungen der Räder einer Achse (z. B. Rad vorne rechts und Rad vorne links) stehen. Die Nenner werden jeweils aus den übrigen Größen der Raddrehbewegungen gebildet. Diese Prüfgrößen werden in verschiedenen Geschwindigkeits-, Radmomenten- und Querbeschleunigungs- oder Gierratenintervallen ermittelt. Weiterhin werden Abrollumfangsdifferenzen zur Druckverlustbewarnung ($\Delta$DIAG, $\Delta$SIDE, $\Delta$AXLE) zwischen aktuellen und gelernten Werten bestimmt. Diese Abrollumfangsdifferenzen werden folglich auch in den Intervallen aus einem aktueller Wert und dem zum aktuellen Intervall gehörigen Lernwert bestimmt.

Verallgemeinert erfolgt die Bestimmung von Druckverlusten an einem oder mehreren Reifen mittels des indirekt messenden Reifendrucküberwachungssystems (DDS) unter Auswertung der Abrollumfangsdifferenzen $\Delta$DIAG, $\Delta$SIDE und $\Delta$AXLE. In einer besonders einfachen Ausgestaltung wird hierbei folgende Bedingung ausgewertet:

$$\text{Max1}\{|\Delta\text{DIAG}|, |\Delta\text{SIDE}|, |\Delta\text{AXLE}|\} + \tag{1}$$

$$\text{Max2}\{|\Delta\text{DIAG}|, |\Delta\text{SIDE}|, |\Delta\text{AXLE}|\} > 2*S_{\text{eff}}$$

wobei Max1 den größten Wert und Max2 den zweitgrößten Wert aus der Menge der Beträge der Differenzen der drei berücksichtigten Abrollumfangsdifferenzen $\{|\Delta\text{IAG}|, |\Delta\text{SIDE}|, |\Delta\text{AXLE}|\}$ darstellt. $S_{\text{eff}}$ bezeichnet hierbei die Schwelle für die Druckverlustwarnung. Diese Schwelle $S_{\text{eff}}$ wurde bisher bei dem indirekt messenden Reifendrucksystem (DDS) nur fahrzeugspezifisch bzw. reifenspezifisch vorgegeben. Diese Schwelle $S_{\text{eff}}$ wird, wie weiter unten beschrieben, durch die druckbedingten Änderungen der Schwingungseigenschaften festgelegt. Ist Bedingung (1) erfüllt, so wird eine Druckverlustwarnung ausgegeben, wobei die Druckverlustwarnung aufgrund der nicht idealen Bedingungen (Rauschen bzw. allgemeine Störungen) im Fahrzeug erst ausgegeben wird, wenn eine statistische Absicherung, z. B. signifikante Überschreitung der Schwelle, Beobachtung über einen längeren Zeitraum oder andere, bekannte statistische Bewertungen, vorliegt.

Zur Berechnung der (Warn-) Schwelle $S_{\text{eff}}$ werden die Abrollumfangsdifferenzen ($\Delta$DIAG, $\Delta$SIDE, $\Delta$AXLE) so interpretiert, dass sich für die verschiedenen Reifen des Fahrzeugs die einzelnen Anteile an den Abrollumfangsänderungen $\Delta U_i$ bestimmen lassen. Die Werte $\Delta U_i$ beschreiben dabei, wie groß die einzelnen Abrollumfangsabweichungen an einem von drei Rädern i bezogen auf das vierte Rad j sind. Da das indirekt messende Reifendrucküberwachungssystem (DDS) Abweichungen der Räder untereinander bewertet, ist dieser Bezug auf ein viertes Rad erforderlich. Für das vierte Rad j gilt folglich $\Delta U_j = 0$. Der Zusammenhang lautet also:

$$\{\Delta U_i, i=1,2,3\} = f(\Delta\text{DIAG}, \Delta\text{SIDE}, \Delta\text{AXLE})$$

Welches Rad $j\neq i$ die geringste Veränderung erfahren hat und damit zur Bezugsgröße wird, ist ebenfalls Ergebnis dieser Betrachtung, die unten näher erläutert wird. Die Werte $\Delta U_i$ können einerseits direkt zur Druckverlustwarnung herangezogen werden, wofür gilt dass $\Delta U_i$ die Warnschwelle für eine Abrollumfangsänderung $S_u$ überschreiten muss und wobei dem Fahrer sogar die betroffene Position angezeigt werden kann. Andererseits können diese radspezifischen Abrollumfangsänderungen $\Delta U_i$ in der Warnstrategie verwendet werden, um zusammen mit den per Frequenzanalyse beobachteten Veränderungen die Schwelle $S_{\text{eff}}$ für eine Druckverlustwarnung anzupassen.

Grundidee ist dabei, dass bei Vorliegen einer guten Korrelation zwischen beiden Verfahren (DDS und Frequenzanalyse), die Schwelle $S_{\text{eff}}$ entsprechend den Ergebnissen der Frequenzanalyse verändern, insbesondere absenken, zu können. Liegt dagegen eine schlechte Korrelation, also ein Widerspruch vor, darf die Schwelle nicht verändert, insbesondere reduziert, werden.

Zunächst wird die genaue Vorgehensweise zur Bestimmung der $\Delta U_i$-Werte näher erläutert. Dabei wird zuerst eine Hilfsgröße $U_i$ eingeführt, welche die Abrollumfangsveränderung an einer Position i bezogen auf den gelernten Zustand beschreibt. Die gesuchte Größe $\Delta U_i$ bezeichnet dagegen die Abrollumfangsveränderung $U_i$ an der Position i bezogen auf die Abrollumfangsveränderung $U_j$ an der Position mit der kleinsten Abrollumfangsveränderung j, es gilt also $\Delta U_i = U_i - U_j$. Zur Berechnung der Anteile der Abrollumfangsveränderungen $U_i$, die auf die einzelne Radposition entfallen, wird folgende Linearkombination betrachtet:

$$(\Delta \text{DIAG}, \Delta \text{SIDE}, \Delta \text{AXLE})^T = \sum (U_i * Ri) \quad \text{mit } i = 0...3 \qquad (2)$$

(wobei i = 0 ...3 Rad vorne links, Rad vorne rechts, Rad hinten rechts, Rad hinten links bedeutet)
und den Druckverlustvektoren Ri nach folgender Definition:

$$R0 = \{-1,-1,-1\}^T$$

$$R1 = \{1,1,-1\}^T$$

$$R2 = \{-1,1,1\}^T$$

$$R3 = \{1,-1,1\}^T$$

In dieser Definition ist durch die gewählten Vorzeichen der Vektoren berücksichtigt, dass nur Druckverluste und damit Abrollumfangsverringerungen im Betrieb zu erwarten sind und diese Abrollumfangsverringerungen als positive $U_i$ definiert sind.

Das Gleichungssystem (2) umfasst drei Gleichungen mit den vier Unbekannten $U_i$ und ist damit ohne zusätzliche Bedingung nicht lösbar. Setzt man zunächst voraus, dass die Radposition j mit dem niedrigsten Druckverlust bekannt ist, kann folgende Substitution erfolgen:

$$\Delta U_i = U_i - U_j \quad \text{mit } U_j = \text{Min}(\{U_i\})$$

$$(\Delta \text{DIAG}, \Delta \text{SIDE}, \Delta \text{AXLE})^T = \sum (\Delta U_i * Ri) \quad \text{mit } i = 0...3, i \neq j \qquad (3)$$

Da die Position j unbekannt ist, muss dass Gleichungssystem viermal unter Variation von j mit j = 0...3 gelöst werden. Aus der Menge der vier möglichen Lösungen $L_j$

$$L_j = \{\Delta U_i, i = 0...3, i \neq j\}_j \quad j = 0...3$$

ist nur die Lösung $L_j$ korrekt, für die alle $\Delta U_i$ positive Werte annehmen (wie per Definition festgelegt), d. h.

$L_j = L_{j\_}$Lösung: $\Delta U_i \geq 0$ für i = 0...3, i≠j

Die korrekte Lösung $L_j$ enthält also die einzelnen Anteile der Abrollumfangsänderungen, die in die Warnstrategie einfließen.

Das indirekt messende Reifendrucküberwachungssystem (DDS) erkennt einen Reifendruckverlust daran, dass eine Grundwarnschwelle S überschritten wird. Diese Grundwarnschwelle S wird dem indirekt messenden Reifendrucküberwachungssystem (DDS) beispielsweise in Abhängigkeit von fahrzeug- und/oder reifenspezifischen Gegebenheiten vorgegeben. Bei dem erfindungsgemäßen Verfahren wird demgegenüber eine angepasste Schwelle $S_{eff}$ (siehe Gleichung (1)) verwendet, bei deren Überschreitung eine Druckverlustwarnung ausgegeben wird. Die angepasste Schwelle $S_{eff}$ wird hierbei aus der Grundwarnschwelle S und einer Schwellenabsenkung $\Delta S$ bestimmt, wobei die Schwellenabsenkung $\Delta S$ von der Verschiebung der Torsionseigenfrequenz $\Delta f_P$ und einem Korrelationswert K beeinflusst wird.

$$S_{eff} = S * (1 - \Delta S(\Delta f_p, K)) \qquad (4)$$

Die angepasste Schwelle $S_{eff}$ hängt also einerseits von der Güte der Korrelation zwischen den Ergebnissen für die Abrollumfangsänderungen und den Ergebnissen für die Frequenzanalyse ab. Andererseits legt die Höhe des durch die Frequenzanalyse bewerteten Druckverlusts die Schwellenanpassung fest. Durch die Berücksichtigung der Verschiebung der Torsionseigenfrequenz $\Delta f_p$ wird sichergestellt, dass die Anpassung, insbesondere die Absenkung, der Schwelle $S_{eff}$ proportional zu dem ermittelten Druckverlust der Frequenzanalyse erfolgt, größere Verschiebung der Torsionseigenfrequenz $\Delta f_p$ führen also zu einer größeren Absenkung der angepassten Schwelle $S_{eff}$.
Der Korrelationswert K beschreibt dabei die Korrelation zwischen den Ergebnissen für die Verschiebung der Torsionseigenfrequenz $\Delta f_p$ und den Ergebnissen für die Abrollumfangsänderung $\Delta U_i$ wie oben beschrieben. Diese Korrelation wird bevorzugt über alle Räder bestimmt, sie kann aber auch radindividuell bestimmt werden. Bei dem indirekt messenden Reifendrucküberwachungssystem (DDS) werden, wie beschrieben, die Abweichungen von drei Rädern i im Verhältnis zum vierten Rad j berechnet. Zur Korrelation müssen folglich auch Unterschiede der Verschiebung der Torsionseigenfrequenz $\Delta f_p$ eines jeden der drei Räder i bezogen auf dieses vierte Rad j betrachtet werden, d. h. $\Delta f_{p,i}$-$\Delta f_{p,j}$. Dieser Korrelationswert K dient zur Bewertung, ob beide Verfahren (DDS und Frequenzanalyse) dieselben Positionen für die Druckverluste und auch für die Höhe der Druckverluste gefunden haben. Bei guter Übereinstimmung wird dieser Korrelationswert K groß und bei Widersprüchen wird er klein bzw. zu Null, so dass dann keine Schwellenabsenkung vorgenommen wird. Wird das System so ausgelegt, dass eine gegenseitige Plausibilisierung von DDS und Frequenzanalyse erfolgt, so wird bei unzureichender Korrelation auch eine Druckverlustwarnung vollständig verhindert.
Die Schwellenabsenkung $\Delta S$ wird wie folgt berechnet:

$$\Delta S(\Delta f_p, K) = K * \text{max1}(\{\Delta f_{p,i}\}) \qquad (5)$$

mit i = Rad vorne links, Rad vorne rechts, Rad hinten links, Rad hinten rechts
wobei max1 ($\{\Delta f_{p,i}\}$) den größten über die Frequenzanalyse festgestellten Druckverlust bezeichnet. Zur Berechnung von K werden $\Delta U_i$ und ($\Delta f_{p,i}$-$\Delta f_{p,j}$) so auf eine individuelle Schwelle normiert, dass ein Wert von 100 % einer Warnschwelle für eine Druckverlustwarnung durch das Einzelsystem entspricht. Für die normierten Werte $\Delta U_n$ gilt also

$$\Delta U_{n,i} = \Delta U_i / S_U \quad \text{und} \quad \Delta f_{p,n,i} = (\Delta f_{p,i} - \Delta f_{p,j}) / S_f$$

wobei $S_U$ die individuelle Schwelle für eine Bewarnung von Abrollumfangsveränderungen und $S_f$ die individuelle Schwelle für eine Bewarnung von Frequenzveränderungen bezeichnet.
Mit den normierten Werten $\Delta U_n$ und $\Delta f_{p,n}$ wird nun der Korrelationswert nach

$$K = \frac{\sum (\Delta U_{n,i} * \Delta f_{p,n,i})}{\sqrt{\sum (\Delta U_{n,i})^2 * \sum (\Delta f_{p,n,i})^2}}$$

berechnet, wobei i drei der vier möglichen Werte aus der Menge {
Rad vorne links, Rad vorne rechts, Rad hinten links, Rad hinten rechts } annimmt, so dass für den vierten Wert j gilt $\Delta U_{n,i} = 0$. Für den Fall, dass K negativ wird, wird der Wert auf Null begrenzt, so dass es nicht zu einer Schwellenerweiterung kommt.
In der weiter unten stehenden Tabelle wird die Bedeutung der angegebenen Gleichungen anhand von Zahlenbeispielen veranschaulicht.
Die Raddrehbewegung, welche bei dem bekannten Reifendrucküberwachungssystem ausgewertet wird, und die Schwingungseigenschaft des Reifens hängen weitgehend von den Reifendimensionen (Reifenbreite, Reifenhöhe, Reifendurchmesser) und den Materialeigenschaften (Radial- oder Diagonalreifen, Gummimischung des Reifens etc.)

des Reifens ab. Da ein Fahrzeug zumeist mit einer Vielzahl von unterschiedlichen Reifengrößen und Reifentypen ausgestattet werden kann, ist es sinnvoll, dies bei dem erfindungsgemäßen Verfahren zu berücksichtigen. Diese Berücksichtigung erfolgt in einem ersten Schritt des erfindungsgemäßen Verfahrens durch eine Lernphase, in welcher die Reifeneigenschaften, insbesondere die Druckempfindlichkeit ($df_p$/dp), der verwendeten Reifen eingelernt wird. Das Lernen der individuellen Druckempfindlichkeit ($df_p$/dp) eines jeden Reifens am Fahrzeug erfolgt durch die Ausnutzung der Druckveränderungen während des Aufwärmens oder Abkühlens der Reifen im Betrieb. Sind die Reifeneigenschaften eingelernt, so werden die Raddrehbewegungen, beispielsweise die Veränderungen der Abrollumfänge der Räder, und die Schwingungseigenschaften der Reifen in einer gemeinsamen Warnstrategie wie oben beschrieben miteinander verknüpft. Die Kriterien (DIAG, SIDE, AXLE, $\Delta f_p$) für die Raddrehbewegungen und die Schwingungseigenschaften werden in Geschwindigkeits- und Radmomentenbereichen eingelernt. Die Geschwindigkeits- und Radmomentenbereiche für die Raddrehbewegungen und die Schwingungseigenschaften müssen hierbei nicht gleich sein. Die Auswertung der Kriterien (DIAG, SIDE, AXLE, $\Delta f_p$) erfolgt ebenfalls geschwindigkeits- und radmomentenabhängig.

Alle bekannten Systeme zur Reifendrucküberwachung per Frequenzanalyse basieren auf dem physikalischen Nutzeffekt einer druckbedingten Verschiebung einer charakteristischen Torsionseigenfrequenz. Die genaue Lage der Torsionseigenfrequenz $f_p$ ist ebenso wie die Druckempfindlichkeit $df_p$/dp eine Reifeneigenschaft, somit nehmen beide Größen für verschiedene Reifentypen unterschiedliche Werte an. Typischerweise kann die Torsionseigenfrequenz $f_p$ für verschiedene Reifen beim selben Druck im Bereich von etwa 33 bis etwa 48 Hz schwanken. Die Werte der Druckempfindlichkeit $df_p$/dp schwanken für dieselben Reifen im Bereich von etwa 4 bis etwa 8 Hz je 1 bar Reifenluftdruck.

Da der Reifentyp in der Regel nicht bekannt ist und für normale Fahrzeuge in der Regel eine Vielzahl von Reifendimensionen und -typen eingesetzt werden dürfen, muss ein herkömmliches System dies tolerieren. Dies führt einerseits dazu, dass die Frequenzanalyse in einem breiten Frequenzbereich, nämlich in diesem Fall z. B. etwa 20 bis etwa 60 Hz mit hoher Auflösung, z. B. 0,5 Hz (entspricht 81 Frequenzen) betrieben werden muss. Die Anzahl der zu berücksichtigenden Frequenzen legt dabei direkt die Anforderungen an den Rechner fest, auf dem der Algorithmus ausgeführt wird. Hier sind vor allem der Arbeitsspeicher (RAM) und die Laufzeit betroffen.

Wird, wie es in einer zweiten bevorzugten Ausführungsform vorgesehen ist, in einer vorgeschalteten Lernphase zuerst nur die ungefähre Frequenzlage der Torsionseigenfrequenz $f_p$ bestimmt, so ist das erfindungsgemäße Verfahren besonders ressourcenschonend. Hierbei wird in einer zeitlich kurzen, ersten Lernphase zunächst die grobe Lage der Torsionseigenfrequenz $f_p$ in einem weiten Frequenzbereich (z. B. 20 bis 60 Hz) mit einer groben Frequenzauflösung, z. B. 1 Hz (entspricht 41 Frequenzschritte) bestimmt. Anschließend wird nun der relevante Frequenzbereich für die eigentliche Lernphase festgelegt, z. B. zu $f_p$ -15 Hz < f < $f_p$ + 5 Hz, wobei hier nun eine Frequenzauflösung von 0,5 Hz möglich ist, um dieselbe Anzahl Frequenzschritte (41) auszunutzen. Die erforderlichen Ressourcen können mit diesem Verfahren somit halbiert werden, wobei allein der Nachteil einer insgesamt etwas längeren Lernphase in Kauf genommen werden muss.

Die Abhängigkeit der Druckempfindlichkeit $df_p$/dp vom Reifen führt in heutigen Systemen, welche eine Druckwarnung direkt auf Basis der Ergebnisse der Frequenzanalyse auslösen, dazu, dass die Einhaltung fester Minderdruck-Warnschwellen nicht erreicht werden kann. In der Applikation des Algorithmus kann nur eine feste Warnschwelle hinsichtlich der Frequenzverschiebung, z. B. $\Delta f_{warn}$ = 3 Hz, verwendet werden, die als Kompromiss über die möglichen Reifen für das betrachtete Fahrzeug gewählt wird. Diese Warnschwelle führt nun abhängig vom Reifen zu verschiedenen Warnminderdrücken, nämlich beispielsweise -0,75 bar für den unempfindlichen Reifen mit einer Druckempfindlichkeit von $df_p$/dp = 4 Hz/bar und beispielsweise -0,375 bar für empfindliche Reifen mit der doppelten Druckempfindlichkeit von $df_p$/dp = 8 Hz/bar.

Durch eine dritte bevorzugte Ausführungsform des erfindungsgemäßen Verfahrens wird eine Minderdruckwarnung bei gleichen Drücken für alle Reifen erreicht. In dieser Ausführung wird die Frequenzanalyse nicht nur zum Anpassen der Warnschwellen des DDS herangezogen, sondern direkt zur Druckbewarnung eingesetzt. Charakteristisch ist, dass für die zu bewarnende Frequenzverschiebung $\Delta f_{warn}$ im Algorithmus nur ein Startwert, z. B. 3 Hz, hinterlegt wird. Die wirklich verwendete Warnschwelle $S_f$ wird dann in einem zusätzlich ablaufenden Lernalgorithmus reifenabhängig adaptiert. Hierbei wird der Effekt ausgenutzt, dass sich Reifen im Betrieb so stark aufgrund der Walkarbeit erwärmen können, dass sich eine Druckerhöhung von bis zu 0,3 bar einstellt. Wird z. B. zunächst ein Reifen weitgehend kalt bei einer Fahrzeuggeschwindigkeit von 40 km/h eingelernt und dann im Anschluss an eine längere Autobahnfahrt warm wieder bei 40 km/h betrieben, so ist eine Erhöhung der Torsionseigenfrequenz aufgrund des höheren Luftdrucks zu erkennen. Der oben im Beispiel genannte empfindliche Reifen zeigt dann eine Verschiebung der Torsionseigenfrequenz um etwa 2,4 Hz, der unempfindliche nur um etwa 1,2 Hz. Erfolgt nun z. B. aufgrund einsetzenden Regens eine erneute Abkühlung der Reifen, so wirkt sich dies in genau umgekehrter Weise aus.

Eine entscheidende Voraussetzung für die Ausnutzung dieses Effekts ist somit, genau detektieren zu können, wann aufgewärmte Reifen vorliegen bzw. wann die Reifen kalt sind. In dem erfindungsgemäßen Verfahren wird hierbei der Effekt ausgenutzt, das Aufwärm- und Abkühlvorgänge immer alle vier Reifen am Fahrzeug betreffen, d. h. stellt man eine einheitliche Erhöhung der Torsionseigenfrequenz $f_p$ an allen vier Rädern fest, so ist davon auszugehen, dass die Reifen warm sind. Verringert sich die Torsionseigenfrequenz $f_p$ dagegen an allen vier Rädern gleichzeitig und verharrt dann auf einem Wert, so ist von kalten Reifen z. B. aufgrund von Regen oder allgemeiner Abkühlung auszugehen. Wenn sich demgegenüber die Torsionseigenfrequenz $f_p$ an allen vier Rädern gleichzeitig verringert und nicht auf einem Wert verharrt, so ist von einem gleichzeitigen Druckverlust an allen vier Rädern auszugehen. Veränderungen, die nur einzelne Reifen betreffen werden nicht ausgenutzt. Hierbei wird also nicht nur der Absolutwert der Torsionseigenfrequenzen herangezogen, sondern insbesondere das Verhalten der Torsionseigenfrequenzen über der Zeit bewertet.

In einer ersten einfachen Ausgestaltung der dritten Ausführungsform können damit allein Maximal- und Minimalwerte der Torsionseigenfrequenz $f_p$ zur Entscheidung über die Empfindlichkeit herangezogen werden. Hierbei geht man davon aus, dass sich im normalen Fahrbetrieb ein jeder Zustand (warm und kalt) einmal einstellen wird.

In einer zweiten genaueren Ausgestaltung der dritten Ausführungsform wird darüber hinaus die Außentemperatur verwendet, um das aktuelle Temperaturniveau gegenüber dem Temperaturniveau zum Zeitpunkt des Resets, sowie das Aufwärmpotential abhängig vom Zustand der Umgebung bewerten zu können. Sofern der Algorithmus in einem Bremsensteuergerät ausgeführt wird, kann für die Außentemperatur die im Steuergerät per bereits vorhandenem Sensor gemessene Temperatur verwendet werden. Andernfalls kann auch die Außentemperatur vom Fahrzeugbus, z. B. CAN, benutzt werden. Außerdem wird innerhalb eines jeden Zündungslaufs eine Bewertung der Walkenergie der Reifen vorgenommen, die im wesentlichen vom Geschwindigkeitsprofil abhängt (z. B. aufintegrieren der Rotationsenergien). Hierüber kann die erwartete Druckerhöhung abgeschätzt werden.

In einer dritten Ausgestaltungsform der dritten Ausführungsform wird darüber hinaus die Fahrzeugstandzeit vor dem aktuellen Zündungslauf mit herangezogen, um sicherer bewerten zu können, ob mit warmen oder kalten Reifen gestartet wurde. Diese Standzeit kann z. B. durch einen Nachlauf des Rechners über das "Zündung aus" Signal hinaus ermittelt werden. In der Praxis wird aus Gründen der Schonung der Fahrzeugbatterie vermutlich ein Nachlauf von maximal 30 min ausreichen. Oder die Uhrzeit wird - sofern verfügbar - direkt vom Fahrzeugbus, z. B. CAN, eingelesen. Zur Stützung der Annahme einer regenbedingten Abkühlung der Reifen können darüber hinaus Signale eines Regensensors vom Fahrzeugbus eingelesen werden.

Durch die Kombination des indirekt messenden Reifendrucküberwachungssystems (DDS) mit der Frequenzanalyse (FA) kann sowohl eine verbesserte Genauigkeit zur Erkennung von Druckverlusten erreicht werden, als auch die Robustheit des Gesamtsystems gegen Fehlwarnungen erhöht werden. Dies wird dadurch erreicht, dass die Informationen der einzelnen Systeme DDS und FA jeweils zur gegenseitigen Absicherung einer von einem Einzelsystem ausgesprochenen Druckwarnung herangezogen werden. Dies kann zum Beispiel durch Verwendung des oben beschriebenen Korrelationswertes K geschehen. Die gegenseitige Absicherung findet ihre Anwendung allerdings nur für kleinere Druckverluste, die im Rahmen feiner Warnschwellen für beide Systeme (DDS und FA) liegen. Um große Druckverluste in jedem Fall sicher bewarnen zu können, wird für beide Systeme (DDS und FA) eine grobe Warnschwelle verwendet, nach deren Überschreiten eine Absicherung durch das andere System nicht mehr erforderlich ist, sondern immer eine Warnung ausgegeben wird.

Die Strategie, nach der in dieser Ausführungsform eine Warnung an den Fahrer in Abhängigkeit von den Systemzuständen von FA und DDS ausgegeben wird, ist in den folgenden Tabellen zusammengefasst.

Während die erste Tabelle die grobe Logik erläutert, sind in der zweiten Tabelle Zahlenbeispiele genannt. Die angegebenen Prozentzahlen zeigen dabei an, wie nah das jeweilige Kriterium von DDS (DIAG, SIDE, AXLE) und FA ($\Delta f_p$) sich der Warnschwelle genähert hat. In diesem Beispiel ist 100 % die feine Schwelle, 150 % der feinen Schwelle entspricht der groben Schwelle. Ausnutzung von 50 % der feinen Schwelle ist ausreichend als Bestätigung.

| Warnung an Fahrer | Zustand DDS | Zustand FA |
|---|---|---|
| Ja | beliebig | Warnung (grobe Schwelle) |
| Ja | Warnung (grobe Schwelle) | beliebig |
| Ja | Warnung (feine Schwelle) | Warnschwelle (fein) auf min. einem Reifen > x % (z. B. x=50) |
| nein | Warnung (feine Schwelle) | Warnschwelle (fein) an keinem Reifen > x % (z. B. x=50) |
| nein | DDS Raderkennung zeigt andere Position (en) oder Warnschwelle bzw. Schwelle (fein) für Raderkennung für betroffene Reifen < x% (z. B. x=50 bzw. abhängig von Zustand FA) | Warnung (feine Schwelle) für ein bis drei Positionen |
| Ja | Schwelle (fein) für Raderkennung für betroffene Reifen < x % (z. B. x=50 bzw. abhängig von Zustand FA) | Warnung (feine Schwelle) für ein bis drei Positionen |

(fortgesetzt)

| Warnung an Fahrer | Zustand DDS | | | | | | | Zustand FA | |
|---|---|---|---|---|---|---|---|---|---|
| Ja | beliebig | | | | | | | Warnung (feine Schwelle) an allen vier Reifen | |

| Anzahl Druckverluste | $\Delta f$ (in % der Warnschwelle, $\Delta f_{p,n}$) | | | | DDS (% Warnschwelle, $\Delta U_{l,v}$) | | | | Warnung | Kommentar |
|---|---|---|---|---|---|---|---|---|---|---|
| | VL | VR | HL | HR | VL | VR | HL | HR | j/n | |
| 1 | 100 | 0 | 0 | 0 | 50 | 0 | 0 | 0 | j | DDS bestätigt Tendenz, feine Warnschwelle erlaubt |
| 1 | 0 | 100 | 0 | 0 | 0 | 10 | 0 | 0 | n | DDS bestätigt Tendenz nicht, nur grobe Warnschwelle |
| 1 | 0 | 0 | 150 | 0 | 0 | 0 | 10 | 0 | j | über grober Warnschwelle, Bestätigung durch DDS nicht nötig |
| | | | | | | | | | | |
| 2 | 100 | 100 | 0 | 0 | 50 | 50 | 0 | 0 | j | DDS bestätigt Tendenz, feine Warnschwelle erlaubt |
| 2 | 0 | 0 | 100 | 100 | 0 | 0 | 10 | 10 | n | DDS bestätigt Tendenz nicht, nur grobe Warnschwelle |
| 2 | 0 | 150 | 0 | 150 | 0 | 10 | 0 | 10 | j | über grober Warnschwelle, Bestätigung durch DDS nicht nötig |
| | | | | | | | | | | |
| 3 | 100 | 100 | 100 | 0 | 50 | 50 | 50 | 0 | j | |
| 3 | 0 | 100 | 100 | 100 | 0 | 10 | 10 | 10 | n | DDS bestätigt Tendenz nicht, nur grobe Warnschwelle |
| 3 | 150 | 100 | 100 | 0 | 10 | 10 | 10 | 0 | j | über grober Warnschwelle, Bestätigung durch DDS nicht nötig |
| | | | | | | | | | | |

(fortgesetzt)

| Anzahl Druckverluste | $\Delta f$ (in % der Warnschwelle, $\Delta f_{p,n}$) | | | | DDS (% Warnschwelle, $\Delta U_{t,v}$) | | | | Warnung | Kommentar |
|---|---|---|---|---|---|---|---|---|---|---|
| | VL | VR | HL | HR | VL | VR | HL | HR | j/n | |
| 4 | 100 | 100 | 100 | 100 | 0 | 0 | 0 | 0 | j | Warnung mit feiner Schwelle, da vier mal bestätigt |
| 4 | 75 | 125 | 75 | 75 | 0 | 20 | 10 | 10 | j | Warnung mit feiner Schwelle, da vier mal bestätigt |

Für viele Fahrzeuge treten unterschiedliche Empfindlichkeiten gegenüber einem Druckverlust für die angetriebene Achse und die freirollende Achse auf. Wie oben beschrieben betrifft dies für die Frequenzanalyse und für DDS in der Regel unterschiedliche Positionen, d. h. für die Frequenzanalyse kann die angetriebene Achse empfindlicher sein, für DDS dagegen unempfindlicher. In diesem Fall kann das System so ausgelegt werden, dass die verwendeten Schwellwerte für die Druckwarnung $S_u$ und $S_f$ achsspezifisch verwendet werden.

## Patentansprüche

1. Verfahren zur indirekten Reifendrucküberwachung, mit den Schritten:

- Einlernen von Prüfgrößen (DIAG, SIDE, AXLE), welche die Raddrehbewegungen der Räder beschreiben,
- Bestimmen von Abrollumfangsdifferenzen ($\Delta$DIAG, $\Delta$SIDE, $\Delta$AXLE) aus aktuell ermittelten Prüfgrößen und den eingelernten Prüfgrößen,
- Einlernen mindestens einer Torsionseigenfrequenz $f_p$ für mindestens einen Reifen aus dem Schwingungsverhalten der einzelnen Reifen,
- Bestimmen mindestens einer Verschiebung der Torsionseigenfrequenz $\Delta f_p$ aus mindestens einer aktuell ermittelten Torsionseigenfrequenz und aus der mindestens einen eingelernten Torsionseigenfrequenz, und
- Verknüpfen der Abrollumfangsdifferenzen ($\Delta$DIAG, $\Delta$SIDE, $\Delta$AXLE) mit der mindestens einen Verschiebung der Torsionseigenfrequenz $f_p$ in einer gemeinsamen Warnstrategie zur Erkennung und Bewarnung eines Reifenluftdruckverlusts,

dadurch gekennzeichnet, dass in der gemeinsamen Warnstrategie die Schwellen der Abrollumfangsdifferenzen ($\Delta$DIAG, $\Delta$SIDE, $\Delta$AXLE) zur Warnung hinsichtlich eines Reifenluftdruckverlusts in Abhängigkeit von der Verschiebung der Torsionseigenfrequenz $\Delta f_p$ und der Korrelation zwischen den Abrollumfangsdifferenzen ($\Delta$DIAG, $\Delta$SIDE, $\Delta$AXLE) und den Verschiebungen der Torsionseigenfrequenz $\Delta f_p$ angepasst werden.

2. Verfahren nach Anspruch 1, dadurch gekennzeichnet, dass das Einlernen erst nach einem automatisch oder manuell erzeugtem Signal gestartet wird.

3. Verfahren nach Anspruch 1, dadurch gekennzeichnet, dass das Einlernen während des Aufwärmens und/oder des Abkühlens der Reifen durchgeführt wird.

4. Verfahren nach Anspruch 1 oder 3, dadurch gekennzeichnet, dass das Einlernen in mehreren verschiedenen Geschwindigkeits- und/oder Radmomenten- und/oder Querbeschleunigungsintervallen durchgeführt wird.

5. Verfahren nach Anspruch 1, dadurch gekennzeichnet, dass zunächst nur die ungefähre Lage der Torsionseigenfrequenz $f_p$ in einem großen Frequenzbereich, insbesondere im Frequenzbereich von etwa 20 Hz bis etwa 60 Hz, mit einer groben Frequenzauflösung, insbesondere mit einer Frequenzauflösung von etwa 1 Hz, bestimmt wird.

**6.** Verfahren nach Anspruch 5, **dadurch gekennzeichnet, dass** anschließend um die ungefähre Lage der Torsionseigenfrequenz $f_p$ ein Bereich definiert wird, in welchem die genaue Lage der Torsionseigenfrequenz $f_p$ mit einer feinen Frequenzauflösung, insbesondere mit einer Frequenzauflösung von etwa 0,5 Hz, bestimmt wird.

**7.** Verfahren nach Anspruch 3, **dadurch gekennzeichnet, dass** das vollständige Aufwärmen und/oder Abkühlen der Reifen aus einer einheitlichen Erhöhung bzw. Verringerung der Torsionseigenfrequenzen $f_p$ aller Reifen auf einen nahezu konstanten Endwert erkannt wird.

**8.** Verfahren nach Anspruch 3, **dadurch gekennzeichnet, dass** die Veränderung der Außen- bzw. Umgebungstemperatur im Hinblick auf das Aufwärmen/ Abkühlen der Reifen ausgewertet wird.

**9.** Verfahren nach Anspruch 3, **dadurch gekennzeichnet, dass** ein Regensensor im Hinblick auf das Aufwärmen/ Abkühlen der Reifen ausgewertet wird.

**10.** Verfahren nach Anspruch 3, **dadurch gekennzeichnet, dass** über die Länge einer Fahrzeugstandzeit Informationen über den Zustand (kalt oder warm) der Reifen gewonnen wird.

**11.** Verfahren nach Anspruch 1, **dadurch gekennzeichnet, dass** eine Warnung hinsichtlich eines Reifenluftdruckverlusts ausgegeben wird, wenn zumindest eine Abrollumfangsdifferenz ($\Delta$DIAG, $\Delta$SIDE, $\Delta$AXLE) oder mindestens eine Verschiebung der Torsionseigenfrequenz $\Delta f_p$ eine zuvor festgelegte grobe Schwelle überschreitet.

**12.** Verfahren nach Anspruch 1, **dadurch gekennzeichnet, dass** eine Warnung hinsichtlich eines Reifenluftdruckverlusts ausgegeben wird, wenn die Verschiebungen der Torsionseigenfrequenzen $\Delta f_p$ aller Räder eine zuvor festgelegte feine Schwelle überschreiten.

**13.** Verfahren nach Anspruch 1, **dadurch gekennzeichnet, dass** eine Warnung hinsichtlich eines Reifenluftdruckverlusts ausgegeben wird, wenn sowohl mindestens eine Abrollumfangsdifferenz ($\Delta$DIAG, $\Delta$SIDE, $\Delta$AXLE), als auch mindestens eine Verschiebung der Torsionseigenfrequenz $\Delta f_p$ zuvor festgelegte feine Schwellen überschreiten.

**14.** Verfahren nach Anspruch 13, **dadurch gekennzeichnet, dass** nur dann eine Warnung hinsichtlich eines Reifenluftdruckverlusts ausgegeben wird, wenn die Korrelation zwischen den Abrollumfangsdifferenzen ($\Delta$DIAG, $\Delta$SIDE, $\Delta$AXLE) und den Verschiebungen der Torsionseigenfrequenz $\Delta f_p$ einen vorgegebenen Grenzwert überschreitet, welcher mit ausreichender Wahrscheinlichkeit auf einen Reifenluftdruckverlust hindeutet.

**15.** Computerprogrammprodukt zur Durchführung aller Schritte eines Verfahrens gemäß mindestens einem der Ansprüche 1 bis 14.

**Claims**

**1.** Method for the indirect tire pressure monitoring, comprising the steps of:

- Learning of test variables (DIAG, SIDE, AXLE), which describe the rotational movements of the wheels,
- Determining of rolling circumference differences ($\Delta$DIAG, $\Delta$SIDE, $\Delta$AXLE) from actually determined test variables and the learnt test variables,
- Learning of at least one torsion natural frequency $f_p$ for at least one tire from the oscillation behavior of the individual tires,
- Determining at least one shift of the torsion natural frequency $\Delta f_p$ from at least one actually determined torsion natural frequency and from the at least one learnt torsion natural frequency, and
- combining the rolling circumference differences ($\Delta$DIAG, $\Delta$SIDE, $\Delta$AXLE) with the at least one shift of the torsion natural frequency $f_p$ in a joint warning strategy for detecting and warning of tire inflation pressure loss,

**characterized in that** in the joint warning strategy, the thresholds of the rolling circumference differences ($\Delta$DIAG, $\Delta$SIDE, $\Delta$AXLE) for warning of tire inflation pressure loss are adapted depending on the shift of the torsion natural frequency $\Delta f_p$ and the correlation between the rolling circumference differences ($\Delta$DIAG, $\Delta$SIDE, $\Delta$AXLE) and the shifts of the torsion natural frequency $\Delta f_p$.

**2.** Method as claimed in claim 1,

**characterized in that** the learning operation is not started until after an automatically or manually generated signal.

3.  Method as claimed in claim 1,
    **characterized in that** the learning operation is executed while the tires heat up and/or cool down.

4.  Method as claimed in claim 1 or 3,
    **characterized in that** the learning operation is executed in several different speed intervals, and/or wheel torque intervals, and/or lateral acceleration intervals.

5.  Method as claimed in claim 1,
    **characterized in that** initially only the rough position of the torsion natural frequency $f_p$ is determined in a wide frequency range, in particular in the frequency range of roughly 20 hertz to roughly 60 hertz, with a coarse frequency resolution, in particular with a frequency resolution of 1 hertz approximately.

6.  Method as claimed in claim 5,
    **characterized in that** subsequently a range is defined around the approximate position of the torsion natural frequency $f_p$, in which the precise position of the torsion natural frequency $f_p$ is determined with a fine frequency resolution, in particular with a frequency resolution of 0.5 hertz approximately.

7.  Method as claimed in claim 3,
    **characterized in that** the complete heating and/or cooling of the tires is detected from a uniform increase or reduction of the torsion natural frequencies $f_p$ of all tires to an almost constant final value.

8.  Method as claimed in claim 3,
    **characterized in that** the change of the outside or ambient temperature is evaluated with respect to the heating/cooling of the tires.

9.  Method as claimed in claim 3,
    **characterized in that** a rain sensor is evaluated with respect to the heating/cooling of the tires.

10. Method as claimed in claim 3,
    **characterized in that** the length of a vehicle immobilization time allows obtaining information about the condition (cold or warm) of the tires.

11. Method as claimed in claim 1,
    **characterized in that** a warning regarding tire inflation pressure loss is issued when at least one rolling circumference difference ($\Delta$DIAG, $\Delta$SIDE, $\Delta$AXLE) or at least one shift of the torsion natural frequency $\Delta f_p$ exceeds a previously fixed coarse threshold.

12. Method as claimed in claim 1,
    **characterized in that** a warning regarding tire inflation pressure loss is issued when the shifts of the torsion natural frequencies $\Delta f_p$ of all wheels exceed a previously fixed fine threshold.

13. Method as claimed in claim 1,
    **characterized in that** a warning regarding tire inflation pressure loss is issued when at least one rolling circumference difference ($\Delta$DIAG, $\Delta$SIDE, $\Delta$AXLE) as well as at least one shift of the torsion natural frequency $\Delta f_p$ exceed previously fixed fine thresholds.

14. Method as claimed in claim 13,
    **characterized in that** a warning regarding tire inflation pressure loss is issued only if the correlation between the rolling circumference differences ($\Delta$DIAG, $\Delta$SIDE, $\Delta$AXLE) and the shifts of the torsion natural frequency $\Delta f_p$ exceeds a predetermined limit value which indicates tire inflation pressure loss with appropriate likelihood.

15. Computer program product for performing all steps of a method as claimed in at least any one of claims 1 to 14.

**Revendications**

1. Procédé de contrôle indirect de la pression de pneus selon les étapes suivantes :

   - apprentissage de grandeurs d'essai (DIAG, SIDE, AXLE) qui décrivent les mouvements de rotation des roues,
   - détermination de différences de circonférence de roulement ($\Delta$DIAG, $\Delta$SIDE, $\Delta$AXLE) à partir de grandeurs d'essai déterminées à l'instant et des grandeurs d'essai apprises,
   - apprentissage d'au moins une fréquence propre de torsion ($f_p$) pour au moins un pneu à partir du comportement en oscillation des différents pneus,
   - détermination d'au moins un décalage de la fréquence propre de tension ($\Delta f_p$) à partir de la au moins une fréquence propre de torsion déterminée à l'instant et de la fréquence propre de torsion apprise, et
   - mise en relation des différences de circonférence de roulement ($\Delta$DIAG, $\Delta$SIDE, $\Delta$AXLE) avec le au moins un décalage de la fréquence propre de torsion ($f_p$) dans une stratégie d'avertissement commune pour reconnaître et signaler une perte de pression de pneus,

   **caractérisé en ce que** dans la stratégie d'avertissement commune les seuils des différences de circonférence de roulement ($\Delta$DIAG, $\Delta$SIDE, $\Delta$AXLE) pour signaler une perte de pression de pneus sont adaptés, en fonction du décalage de la fréquence propre de torsion ($\Delta f_p$) et de la corrélation entre les différences de circonférence de roulement ($\Delta$DIAG, $\Delta$SIDE, $\Delta$AXLE) et les décalages de la fréquence propre de torsion ($\Delta f_p$).

2. Procédé selon la revendication 1, **caractérisé en ce que** l'apprentissage n'est démarré qu'après un signal généré automatiquement ou manuellement.

3. Procédé selon la revendication 1, **caractérisé en ce que** l'apprentissage est exécuté pendant l'échauffement et/ou le refroidissement des pneus.

4. Procédé selon la revendication 1 ou 3, **caractérisé en ce que** l'apprentissage est exécuté pendant plusieurs intervalles différents de vitesse et/ou de moment des roues et/ou d'accélération transversale.

5. Procédé selon la revendication 1, **caractérisé en ce qu'**il est déterminé d'abord uniquement la position approximative de la fréquence propre de torsion ($f_p$) dans une grande plage de fréquence, en particulier dans la plage de fréquence allant d'environ 20 Hz à environ 60 Hz, avec une résolution de fréquence grossière, en particulier avec une résolution de fréquence d'environ 1 Hz.

6. Procédé selon la revendication 5, **caractérisé en ce qu'**il est défini ensuite, autour de la position approximative de la fréquence propre de torsion ($f_p$), un domaine dans lequel la position précise de la fréquence propre de torsion ($f_p$) est déterminée avec une résolution de fréquence fine, en particulier avec une résolution de fréquence d'environ 0,5 Hz.

7. Procédé selon la revendication 3, **caractérisé en ce que** l'échauffement et/ou le refroidissement complet des pneus est reconnu à partir d'une même augmentation, respectivement d'une réduction, des fréquences propres de torsion ($f_p$) de tous les pneus, à une valeur finale presque constante.

8. Procédé selon la revendication 3, **caractérisé en ce que** la variation de la température extérieure ou de la température ambiante est évaluée pour l'échauffement/refroidissement des pneus.

9. Procédé selon la revendication 3, **caractérisé en ce qu'**un capteur de pluie est exploité pour l'échauffement/refroidissement des pneus.

10. Procédé selon la revendication 3, **caractérisé en ce que** des informations relatives à l'état (froid ou chaud) des pneus sont obtenues sur la longueur d'un temps hors circulation du véhicule.

11. Procédé selon la revendication 1, **caractérisé en ce qu'**un avertissement concernant une perte de pression des pneus est délivré lorsqu'au moins une différence de circonférence de roulement ($\Delta$DIAG, $\Delta$SIDE, $\Delta$AXLE) ou au moins un décalage de la fréquence propre de torsion ($\Delta f_p$) dépasse un seuil grossier défini au préalable.

12. Procédé selon la revendication 1, **caractérisé en ce qu'**un avertissement concernant une perte de pression des pneus est délivré lorsque les décalages des fréquences propres de torsion ($\Delta f_p$) de toutes les roues dépassent un seuil fin défini au préalable.

**13.** Procédé selon la revendication 1, **caractérisé en ce qu'**un avertissement concernant une perte de pression des pneus est délivré lorsqu'au moins une différence de circonférence de roulement ($\Delta$DIAG, $\Delta$SIDE, $\Delta$AXLE) ainsi qu'au moins un décalage de la fréquence propre de torsion ($\Delta f_p$) dépasse des seuils fins définis au préalable.

**14.** Procédé selon la revendication 13, **caractérisé en ce qu'**un avertissement concernant une perte de pression des pneus n'est délivré que si la corrélation entre les différences de circonférence de roulement ($\Delta$DIAG, $\Delta$SIDE, $\Delta$AXLE) et les décalages de la fréquence propre de torsion ($\Delta f_p$) dépasse une valeur limite prédéfinie qui indique une perte de pression des pneus avec une probabilité suffisante.

**15.** Produit de programme d'ordinateur pour la mise en oeuvre de toutes les étapes d'un procédé selon l'une au moins des revendications 1 à 14.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10058140 A1
- EP 0578826 B1
- EP 0832768 A2
- EP 0925960 A2
- WO 0187647 A1